# EUROPÄISCHE PATENTANMELDUNG

(11) **EP 1 391 366 A2**
(43) Veröffentlichungstag der Anmeldung: **25.02.2004**
(21) Anmeldenummer: 03015647.5
(22) Anmeldetag: 17.07.2003
(51) Int. Cl.: B62D 1/06, B60Q 9/00

(54) **Fahrzeuglenkrad und Sicherheitssystem**

(30) Priorität: 12.08.2002 DE 20212398 U
(71) Anmelder: TRW Automotive Safety Systems GmbH, 63743 Aschaffenburg (DE)
(72) Erfinder: Kreuzer, Martin, 63839 Kleinwallstadt (DE)
(74) Vertreter: Kitzhofer, Thomas, Dipl.-Ing.

(57) **Zusammenfassung**

Ein Fahrzeuglenkrad umfaßt einen Lenkradkranz (12), mit wenigstens einem im Lenkradkranz (12) angeordneten, mit einem Fluid gefüllten Schlauch (20) und ein Mittel zur Erzeugung einer Druckwelle in dem Fluid, wobei das Mittel so ausgelegt und der Schlauch (20) so angeordnet ist, daß die Druckwelle ein an einer Oberfläche des Lenkradkranzes (12) von einem Fahrer wahrnehmbares haptisches Signal erzeugt.

## Beschreibung

Die Erfindung betrifft ein Fahrzeuglenkrad und ein Sicherheitssystem für ein Fahrzeug.

Es sind bereits viele Vorrichtungen diskutiert worden, um die Aufmerksamkeit eines Fahrers eines Fahrzeugs zu erregen, zum Beispiel um ihn auf eine Gefahrensituation hinzuweisen oder um ihn am Einschlafen zu hindern. Hierzu werden akustische, optische und haptische Signale eingesetzt. Haptische Signale wie etwa eine Vibration des Lenkradkranzes sind besonders vorteilhaft, da bei ihnen im Gegensatz zu optischen oder akustischen Signalen weniger Gefahr besteht, daß sie in ungünstigen Umgebungsbedingungen unbemerkt bleiben. Außerdem werden andere Insassen des Fahrzeugs von den Signalen nicht gestört.

Die DE 198 52 315 A1 schlägt schmale, aufblasbare, am Lenkradkranz vorgesehene Kissen vor, die unterschiedlich hart aufgeblasen werden können, um z. B. beim sportlicheren Fahren ein härteres Lenkrad zur Verfügung zu stellen. Durch Aufpumpen und Ablassen von Fluid sollen auch haptische Rückmeldungen möglich sein.

Die Erfindung schlägt eine Verbesserung einer derartigen Warnvorrichtung vor.

Hierzu weist das erfindungsgemäße Fahrzeuglenkrad wenigstens einen im Lenkradkranz angeordneten, mit einem Fluid gefüllten Schlauch und ein Mittel zur Erzeugung einer Druckwelle in dem Fluid auf, wobei das Mittel so ausgelegt und der Schlauch so angeordnet ist, daß die Druckwelle ein an einer Oberfläche des Lenkradkranzes von einem Fahrer wahrnehmbares haptisches Signal erzeugt. In dieser Anordnung kann weitgehend auf mechanische Teile zur Erzeugung des haptischen Signals verzichtet werden, was die Vorrichtung wenig störanfällig macht. Das durch eine Druckwelle in einem Fluid erzeugte haptische Signal kann auf einfache Weise in Intensität und Form variiert werden, so daß es auch möglich ist, verschiedenartige Signale zur Anzeige verschiedener Gefahrensituationen zu verwenden, die für den Fahrer leicht unterscheidbar sind. Die DE 198 52 315 A1 sieht im Unterschied zur Erfindung keine Druckwellenerzeugung vor.

Gemäß der vorliegenden Erfindung kann das haptische Signal die Form eines wahrnehmbaren Pulses annehmen, bevorzugt ist das Mittel allerdings so ausgelegt, daß die Druckwelle im Fluid eine Vibrationsbewegung des gesamten Lenkrads oder des gesamten Lenkradkranzes hervorruft. Vibrationsbewegungen sind erfahrungsgemäß für den Fahrer sehr deutliche Signale. Die Druckwelle kann alternativ aber auch durch eine reine Schwingungsübertragung im Fluid gebildet werden.

Bevorzugt wird die Erfindung in Lenkrädern eingesetzt, bei denen der Lenkradkranz eine Lederumhüllung aufweist, wobei der Schlauch direkt unter der Lederumhüllung angeordnet ist. Dies garantiert, daß das haptische Signal ohne nennenswerte Verluste an die Hand des Fahrers übermittelt wird. Der Schlauch erstreckt sich längs des Umfangs des Lenkradkranzes über wenigstens 240°.

Bevorzugt ist das Fluid eine Flüssigkeit, und besonders bevorzugt handelt es sich bei der Flüssigkeit um Glykol. Es ist jedoch auch möglich, Luft als Fluid zu verwenden.

In einer vorteilhaften Ausführungsform der Erfindung ist das Mittel zur Erzeugung einer Druckwelle eine Pumpe. Es gibt kleine und leistungsfähige Pumpen, die sich problemlos z.B. im Nabenbereich des Lenkrades oder im Bereich einer Speiche montieren lassen und die geeignet sind, Druckwellen zur Erzeugung eines haptischen Signals in einem Fluid hervorzurufen.

Bevorzugt ruft die Pumpe gemäß eines stochastischen Prozesses eine Bewegung eines vorbestimmten Volumens des Fluids hervor, wodurch sich einfach wahrnehmbare haptische Signale erzeugen lassen. Es ist auch möglich, durch die Pumpe ein vorbestimmtes Volumen des Fluids in eine oszillatorische Bewegung zu versetzen. Auf diese Weise läßt sich leicht eine Vibration des Lenkradkranzes in einer gewünschten Frequenz hervorrufen.

Ein erfindungsgemäßes Lenkrad läßt sich mit einer beliebigen Anzahl von Schläuchen realisieren. Bevorzugt werden jedoch zwei Schläuche verwendet, die an gegenüberliegenden Seiten des Lenkradkranzes verlaufen, und zwar bevorzugt auf der dem Fahrer zugewandten und der dem Fahrer abgewandten Seite des Lenkradkranzes.

Der oder die Schläuche verlaufen vorteilhaft konzentrisch zur Rotationsachse des Lenkrads entlang des Umfangs des Lenkradkranzes. Auf diese Weise kann eine gleichmäßige Vibration des Lenkradkranzes mit Druckwellen geringer Intensität erreicht werden. Außerdem ist, zum Beispiel bei einem Pulsbetrieb, gewährleistet, daß der Fahrer das Signal spürt, egal an welcher Stelle er den Lenkradkranz umgreift.

Die Erfindung findet bevorzugt Einsatz in einem erfindungsgemäßen Sicherheitssystem mit einem beschriebenen Lenkrad, wobei außerdem eine Elektronikeinheit und wenigstens ein mit der Elektronikeinheit verbundener Sensor vorgesehen ist, wobei die Elektronikeinheit so ausgelegt ist, daß sie auf ein Signal des Sensors hin das Mittel zur Erzeugung einer Druckwelle betätigt. Auf diese Weise läßt sich ein durch eine Druckwelle im Fluid erzeugtes haptisches Signal sehr vielfältig zur Warnung eines Fahrers vor Gefahren einsetzen. Es können Sensoren vorgesehen sein, die Abstände und Geschwindigkeiten zu hinter dem Fahrzeug befindlichen Fahrzeugen bestimmen, so daß der Fahrer bei einem Spurwechsel gewarnt werden kann, wenn er ein mit hoher Geschwindigkeit herannahendes Fahrzeug übersieht, um nur ein Beispiel zu nennen. Es können direkt am Fahrzeug angeordnete Sensoren verwendet werden, z.B. Abstandssensoren, es ist aber auch möglich, externe Sensoren einzusetzen, die zum Beispiel Straßen- oder Verkehrsbedingungen überwachen und diese an eine im Fahrzeug befindliche Elektronikeinheit übermitteln.

Weitere Merkmale und Vorteile der Erfindung gehen aus der nachfolgenden Beschreibung von Ausführungsbeispielen im Zusammenhang mit den beigefügten Zeichnungen hervor. In den Zeichnungen zeigen:
- Figur leine schematische Darstellung eines erfindungsgemäßen Sicherheitssystems;
- Figur 2einen Schnitt entlang der Linie II-II in Figur 1;
- Figur 3einen Schnitt entlang der Linie III-III in Figur 1;
- Figur 4eine schematische Darstellung eines erfindungsgemäßen Lenkrads gemäß einer zweiten Ausführungsform der Erfindung; und
- Figur Seinen Schnitt entlang der Linie V-V aus Figur 4.

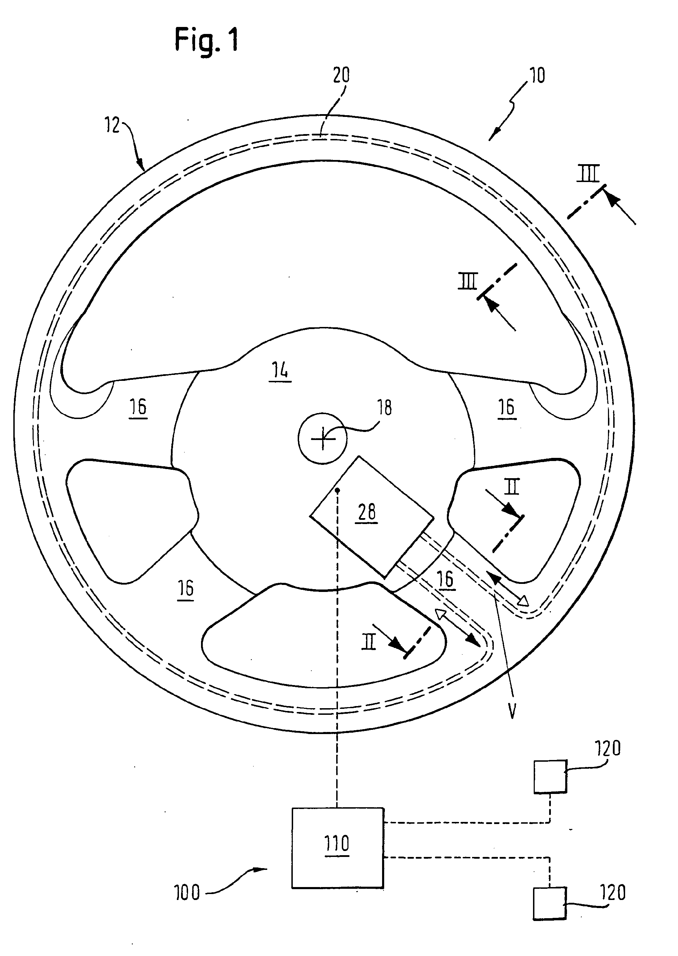

Figur 1 zeigt ein Lenkrad 10 mit einem Lenkradkranz 12, einem Nabenbereich 14 sowie Lenkradkranz 12 und Nabenbereich 14 verbindenden Speichen 16.

Konzentrisch zur Rotationsachse 18 des Lenkrads 10 sind entlang des Lenkradkranzes 12 zwei elastische Schläuche 20 angeordnet. Jeweils ein Schlauch 20 verläuft auf der Oberseite, d.h. auf der dem Fahrer zugewandten Seite des Lenkradkranzes 12, und auf der Rückseite, d.h. auf der dem Fahrer abgewandten Seite des Lenkradkranzes 12. Die Schläuche 20 sind mit einem Fluid 30, bevorzugt Glykol, gefüllt.

Wie man Figur 1 entnehmen kann, erstreckt sich der Schlauch über annähernd 360° des Lenkradkranzes, gesehen in Richtung der Lenkradachse oder Rotationsachse 18.

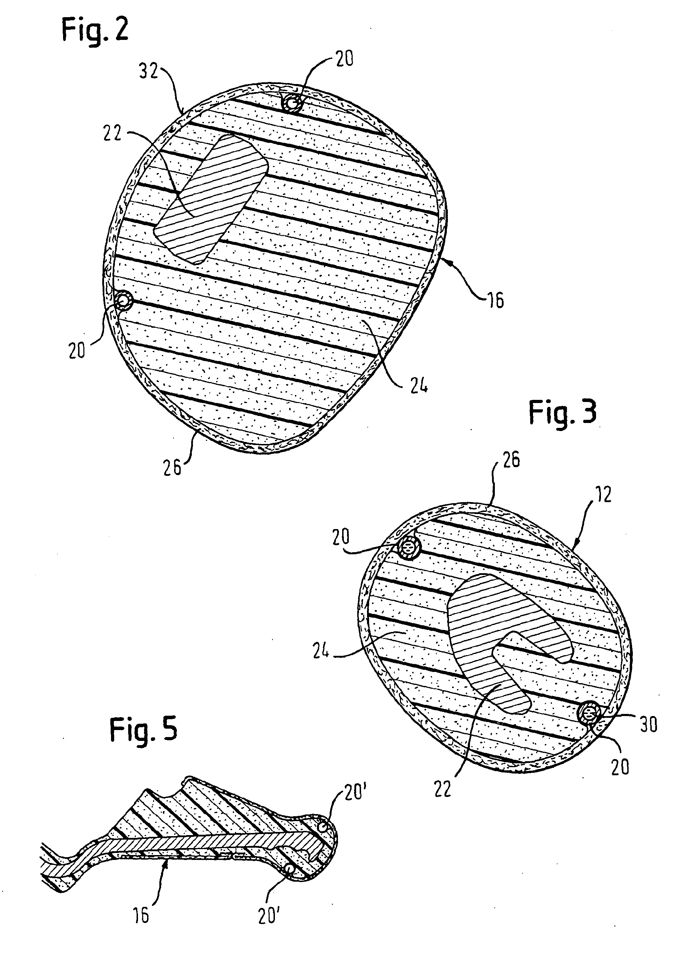

Figur 3 zeigt den Aufbau des Lenkradkranzes 12 genauer. Die Schläuche 20 sind in Aussparungen einer ein Skelett 22 umgebenden Umschäumung 24 angeordnet. Sowohl die Umschäumung 24 als auch die Schläuche 20 sind von einer Lederumhüllung 26 umgeben, wobei die Schläuche 20 direkt unterhalb der Lederumhüllung 26 liegen.

Anhand der Figuren 2, 3 und 5 sieht man die erfindungsgemäße Einbettung der Schläuche 20, 20' in den Lenkradkranz. Im Querschnitt gesehen ist der Lenkradkranz nicht vom Schlauch umgeben. Der Schlauchdurchmesser beträgt maximal 6 mm und bedeckt nur einen kleinen Abschnitt des Umfangs des Lenkradkranzes, bezogen auf dessen Querschnitt.

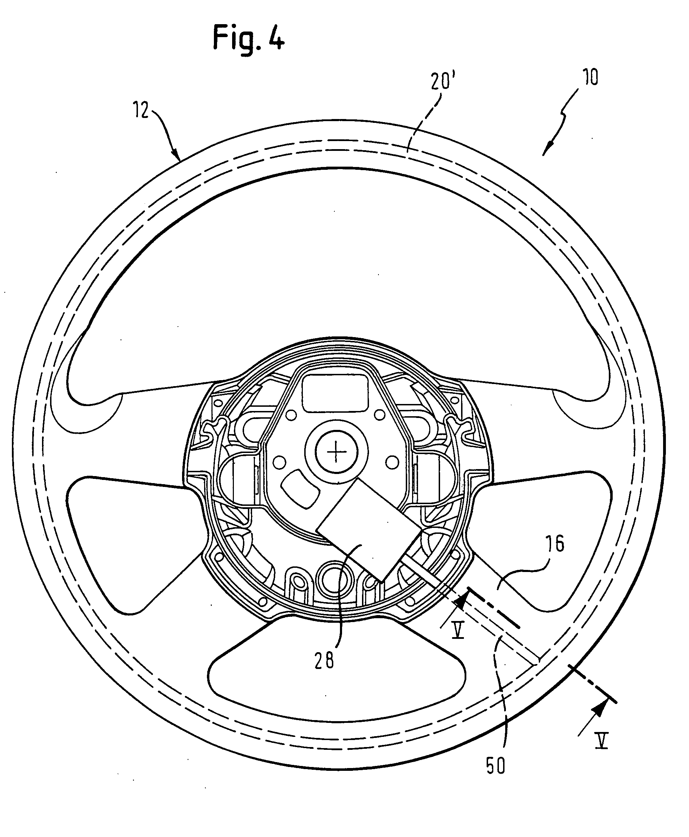

Abschnitte der Schläuche 20 erstrecken sich entlang einer der Speichen 16 bis zu einer Pumpe 28, die im Nabenbereich 14 des Lenkrads 10 angeordnet ist (Fign. 1, 4). Die Pumpe 28 dient als Mittel zur Erzeugung einer Druckwelle im Fluid 30. Hierzu bewegt die Pumpe 28 bevorzugt ein vorbestimmtes Volumen V des Fluids 30, das zu einer Aurweitung der flexiblen Schläuche 20 führt, welche sich wellenförmig fortsetzt und ein haptisches Signal darstellt, das vom Fahrer wahrgenommen wird. Die Bewegung des Volumens V kann oszillierend sein. Ferner wäre es aber auch möglich, die Bewegung des Volumens (Volumenstoß) gemäß eines stochastischen Prozesses zu initiieren.

Als Folge der Bewegung des Volumens V läßt sich zusätzlich der Lenkradkranz 12 zumindest minimal in Vibrationen versetzen, vorzugsweise mit vorbestimmten unterschiedlichen Frequenzen. Die Druckwellen sind an der Oberfläche 32 des Lenkradkranzes 12 als haptische Signale von einem Fahrer wahrnehmbar. Auch die Vibration des gesamten Lenkradkranzes 12 wird als haptisches Signal von einem Fahrer wahrgenommen.

Das Lenkrad 10 ist Teil eines Sicherheitssystems 100 (Fig. 1), das eine Elektronikeinheit 110 sowie Sensoren 120 enthält, die mit der Elektronikeinheit 110 verbunden sind.

Die Elektronikeinheit 110 ist dazu in der Lage, der Pumpe 28 Signale zu übertragen und sie so zur Erzeugung von Druckwellen im Fluid 30 zu veranlassen. Die Sensoren 120 können in einem Fahrzeuginnenraum angeordnet sein, können aber auch als externe Sensoren ausgebildet sein.

Die Figuren 4 und 5 zeigen eine leicht modifizierte zweite Ausführungsform eines Lenkrads 10. Im Unterschied zur vorher beschriebenen ersten Ausführungsform sind die entlang des Lenkradkranzes 12 verlaufenden flexiblen, aufweitbaren Schläuche 20' in sich geschlossen, d.h. verlaufen über die vollen 360° des Lenkradkranzes.

Mit der Pumpe 28 sind die Schläuche 20' entlang einer der Speichen 16 über Verbindungsschläuche 50 verbunden. Auch in diesem Fall leitet die Pumpe 28 über die Verbindungsschläuche 50 eine Druckwelle in die Schläuche 20', die als ein an der Oberfläche 32 des Lenkradkranzes 12 haptisches Signal von einem Fahrer wahrgenommen wird, indem die durch die Volumenbewegung des Fluids erzeugte ringförmige Aufweitung des Schlauchs 20 wie eine Welle längs des Lenkradkranzes 12 umläuft, die ebenfalls ein haptisches Signal darstellt, das vom Fahrer wahrgenommen wird.

Die Anzahl der Schläuche und deren Anschluß an die Pumpe kann von einem Fachmann den jeweiligen Anforderungen angepaßt werden.

Es ist auch denkbar, die Pumpe 28 durch eine andere Vorrichtung zu ersetzen, die geeignet ist, eine Druckwelle im Fluid 30 hervorzurufen.

Durch die Druckwelle ins Fluid 30 kann wenigstens der gesamte Lenkradkranz insgesamt in Schwingungen versetzt werden.

## Patentansprüche

1. Fahrzeuglenkrad mit einem Lenkradkranz (12),
mit wenigstens einem im Lenkradkranz (12) angeordneten, mit einem Fluid (30) gefüllten Schlauch (20; 20')
und mit einem Mittel zur Erzeugung einer Druckwelle in dem Fluid (30),
wobei das Mittel so ausgelegt und der Schlauch (20; 20') so angeordnet ist, daß die Druckwelle ein an einer Oberfläche (32) des Lenkradkranzes (12) von einem Fahrer wahrnehmbares haptisches Signal erzeugt.

2. Fahrzeuglenkrad nach Anspruch 1, **dadurch gekennzeichnet, daß** der Lenkradkranz (12) eine Lederumhüllung (26) aufweist und daß der Schlauch (20; 20') direkt unter der Lederumhüllung (26) angeordnet ist.

3. Fahrzeuglenkrad nach einem der vorhergehenden Ansprüche, **dadurch gekennzeichnet, daß** der Schlauch (20; 20') konzentrisch zu einer Rotationsachse (18) des Lenkrads (10) entlang des Lenkradkranzes (12) verläuft.

4. Fahrzeuglenkrad nach einem der vorhergehenden Ansprüche, **dadurch gekennzeichnet, daß** das Fluid (30) Luft oder eine Flüssigkeit, insbesondere Glykol, ist.

5. Fahrzeuglenkrad nach einem der vorhergehenden Ansprüche, **dadurch gekennzeichnet, daß** das Mittel eine Pumpe (28) ist.

6. Fahrzeuglenkrad nach Anspruch 5, **dadurch gekennzeichnet, daß** die Pumpe (28) im Bereich einer Nabe (14) des Lenkrads (10) angeordnet ist.

7. Fahrzeuglenkrad nach Anspruch 5 oder 6, **dadurch gekennzeichnet, daß** die Pumpe (28) ein vorbestimmtes Volumen (V) des Fluids (30) in eine oszillierende Bewegung versetzt.

8. Fahrzeuglenkrad nach Anspruch 5 oder 6, **dadurch gekennzeichnet, daß** die Pumpe (28) ein vorbestimmtes Volumen (V) des Fluids (30) gemäß eines stochastischen Prozesses bewegt.

9. Fahrzeuglenkrad nach einem der vorhergehenden Ansprüche, **dadurch gekennzeichnet, daß** das Mittel so ausgelegt ist, daß die Druckwelle im Fluid (30) eine Vibrationsbewegung des Lenkradkranzes (12) hervorruft.

10. Fahrzeuglenkrad nach einem der vorhergehenden Ansprüche, **dadurch gekennzeichnet, daß** sich der Schlauch (20; 20') längs des Umfangs des Lenkradkranzes, in Richtung der Lenkradachse gesehen, über wenigstens 240° erstreckt.

11. Fahrzeuglenkrad nach einem der vorhergehenden Ansprüche, **dadurch gekennzeichnet, daß** das Mittel eine Druckwelle erzeugt, die sich längs des Umfangs des Lenkradkranzes (12), in Richtung der Lenkradachse gesehen, fortpflanzt.

12. Sicherheitssystem, mit einem Fahrzeuglenkrad nach einem der Ansprüche 1 bis 11, mit einer Elektronikeinheit (110) und wenigstens einem mit der Elektronikeinheit (110) verbundenen Sensor (120), wobei die Elektronikeinheit (110) so ausgelegt ist, daß sie auf ein Signal des Sensors (120) hin das Mittel zur Erzeugung einer Druckwelle betätigt.
